# EUROPÄISCHE PATENTSCHRIFT

(11) **EP 0 978 663 B1**
(45) Veröffentlichungstag und Bekanntmachung des Hinweises auf die Patenterteilung: **06.10.2004**
(21) Anmeldenummer: 99202432.3
(22) Anmeldetag: 21.07.1999
(51) Int. Cl.: F16B 37/04

(54) **Befestigungseinheit zur Befestigung eines Gegenstandes an einem Profilelement mit einem Längsschlitz**
Fastening assembly for fastening an article to a profile with a longitudinal slit
Unité de fixation pour fixer un article à un profilé ayant une fente longitudinale

(30) Priorität: 05.08.1998 NL 1009809; 26.11.1998 NL 1010655
(43) Veröffentlichungstag der Anmeldung: 09.02.2000
(73) Patentinhaber: J. van Walraven B.V., 3641 RK Mijdrecht (NL)
(72) Erfinder: van Walraven, Jan, 3641 GP Mijdrecht (NL)
(74) Vertreter: Brookhuis, Hendrik Jan Arnold

(56) Entgegenhaltungen:
- EP-A- 0 687 822
- EP-A- 0 775 838
- DE-A- 4 243 185
- DE-C- 19 722 778
- US-A- 4 666 355

## Beschreibung

Die Erfindung bezieht sich auf eine Befestigungseinheit nach dem Oberbegriff des Anspruchs 1. Die Befestigungseinheit ist zur Befestigung eines Gegenstandes an einem Profilelement mit einem Längsschlitz vorgesehen, insbesondere des Typs, der zwei sich in Längsrichtung erstreckende Seiten, einen die Seiten verbindenden Boden, und eine, von zwei ab den Seiten einwärts gerichteten Flanschen, die zwischen ihnen einen Längsschlitz begrenzen, gebildete Oberseite, aufweist. In der Fachwelt sind diese Profilelemente als C-Profile bekannt.

Derartige Befestigungseinheiten werden zum Beispiel verwendet, um Rohrschellen an metallenen Profilelementen zu befestigen, die ihrerseits an der Wand oder der Decke eines Bauwerks angeordnet sind. Auch werden derartige Befestigungseinheiten verwendet, um einen Rahmen aus mehreren miteinander verbundenen Profilelementen herzustellen.

Eine Befestigungseinheit nach dem Oberbegriff des Anspruchs 1 ist aus dem amerikanischen Patent US 5 209 619 bekannt. In diesem amerikanischen Patent zeigen die Figuren 6 und 13, daß die Mutter neben einem mit einem Gewinde versehenen Schraubenloch für das männliche Befestigungselement mit zwei zusätzlichen kleinen Löcher versehen ist, wobei durch jedes dieser kleinen Löcher ein Verbindungsschenkel des aus Kunststoff bestehenden Sicherungselements steckt. Diese Verbindungsschenkel haben an ihrem unter der Mutter herausragenden freien Ende einen verdickten Kopf (Figur 6) oder ein Hakenorgan (Figur 13), mit dem die Verbindungsschenkel die Unterseite der Mutter hintergreifen. Hierdurch sind die Mutter und das Sicherungselement miteinander verbunden.

Das in der metallenen Mutter Anordnen der zusätzlichen kleinen Löcher für die Verbindungsschenkel, wie in der US 5 209 619 beschrieben, ist herstellungstechnisch problematisch, weil derartige kleine Löcher eine getrennte Bearbeitung erfordern. Auch die in der US 4 840 525 gezeigten Sacklöcher, in die die Verbindungsschenkel des Sicherungselements klemmend hineinpassen, sind herstellungstechnisch unpraktisch. Weiter gibt es bei den obengenannten Befestigungseinheiten keine Sicherung des männlichen Befestigungselements in dem Schraubenloch der Mutter, was zu dem Lösen des männlichen Befestigungselements der Mutter oder gerade einem unerwünschten Mitdrehen des männlichen Befestigungselements führen kann, wenn eine auf dieses aufgeschraubte zweite Mutter oder eine Rohrschelle angezogen wird.

Der vorliegenden Erfindung liegt die Aufgabe zugrunde, eine verbesserte Befestigungseinheit zu schaffen, die obengenannte Nachteile behebt. Insbesondere liegt der Erfindung die Aufgabe zugrunde, diese Verbesserung ohne eine erhebliche Kostpreiserhöhung zu den bekannten Befestigungseinheiten und mit herstellungstechnisch einfachen Mitteln zu realisieren.

Die vorliegende Erfindung schafft eine Befestigungseinheit nach dem Oberbegriff des Anspruchs 1, die dadurch gekennzeichnet ist, daß die Aussparung in der Mutter für einen Verbindungsschenkel des Sicherungselements als eine an das Loch in der Mutter grenzende Aussparung gebildet ist. Derartige, an das Befestigungsloch für das männliche Befestigungselement grenzende Aussparungen können bei der Anfertigung leicht und faktisch ohne zusätzliche Kosten realisiert werden.

Die erfindungsgemäße Befestigungseinheit wird in der Praxis zwei wichtige Ausführungen kennen:
- eine Ausführung als eine metallene Mutter mit einem Sicherungskörper, eventuell mit einer Unterlegscheibe, welche Ausführung von einem Monteur in einem C-Profil befestigt werden kann und sich dann klemmend und vorzugsweise mit der Hand verschiebbar, an den Flanschen des C-Profils festhält. Der Monteur kann später ein männliches Verbindungselement in dem Loch der Mutter festsetzen, zum Beispiel schrauben, wenn das Loch in der Mutter ein Schraubenloch ist, und das männliche Verbindungselement zum Beispiel eine Gewindelänge oder ein Schraubenbolzen ist.
- eine Ausführung, bei der dann außerdem bei der Herstellung der Befestigungseinheit bereits ein männliches Verbindungselement in dem zugehörigen Loch in der Mutter festgesetzt ist. Dieses männliche Verbindungselement kann zum Beispiel eine Gewindelänge sein, die in ein Schraubenloch der Mutter eingeschraubt ist, zum Beispiel wie gezeigt in der EP 0 775 838. Das betreffende Loch in der Mutter kann jedoch auch nicht mit einem Gewinde versehen sein, und das männliche Verbindungselement kann dann zum Beispiel durch ein Schmieden, Schweißen oder Nieten in diesem festgesetzt sein.

Das Sicherungselement kann ein einteiliger Kunststoffkörper mit einem oder mehreren integralen Verbindungsschenkeln sein, welcher Körper durch ein Spritzgießen in einer geeigneten Gießform hergestellt sein kann. In einer anderen möglichen Ausführung kann das Sicherungselement jedoch auch aus einem geeigneten Metall sein, zum Beispiel Federstahl oder Aluminium.

In einer möglichen Ausbildung ist die Aussparung ein Schlitz, der sich ab der Oberseite bis an die Unterseite der Mutter erstreckt. Eine derartige Schlitzaussparung kann von einem in einer geeigneten Weise gebildeten Stanzwerkzeug realisiert werden, zum Beispiel mit einem Stanzwerkzeug, das gleichzeitig das, eventuell später mit einem Gewinde zu versehende Loch aus der Mutter herausstanzt.

In einer vorteilhaften Ausbildung ist der Verbindungsschenkel an seinem freien Ende mit einer Verdickung, die die Unterseite der Mutter hintergreift, versehen. Die Verdickung ist vorzugsweise ein an das freie Ende angeformter Haken mit an der Unterseite eine schräg auswärts gerichtete Fläche, so daß bei dessen Einstecken in die Schlitzaussparung der Verbindungsschenkel sich in den von dem Loch gebildeten Raum hineinbiegt, bis der Haken die Unterseite der Mutter hintergreifen kann.

In einer anderen möglichen Ausführungsvariante hat jeder Verbindungsschenkel solche Querabmessungen, daß der in der zugehörigen Aussparung liegende Schenkel sich bis in das Loch in der Mutter erstreckt, in einer solchen Weise, daß ein in dem Loch festzusetzendes Befestigungselement von dem Schenkel gesichert ist. Dieser sichernde Teil des Verbindungsschenkels kann zum Beispiel aus Kunststoff oder aus einem Metall, zum Beispiel aus Aluminium, gefertigt sein. Durch diese Maßnahme verrichtet der Verbindungsschenkel sowohl die Funktion des Verbindens der Mutter und des Sicherungselements, als auch des Sicherns eines in der Mutter festzusetzenden männlichen Befestigungselements. In einer möglichen Variante bildet der sichernde Teil des Verbindungsschenkels eine federnde Lasche, die beim Einstecken des männlichen Verbindungselements in eine zugehörige Vertiefung des männlichen Verbindungselements greift und so eine Schnappverbindung zwischen der Mutter und dem männlichen Verbindungselement realisiert.

In einer praktischen Ausführung hat das Sicherungselement zwei diametral zu der Öffnung für das männliche Befestigungselement liegende Verbindungsschenkel und die Mutter ist mit korrespondierenden Aussparungen, die diametral zu dem Schraubenloch liegen, versehen.

Selbstverständlich würde das Sicherungselement auch eine andere Anzahl Schenkel aufweisen können, zum Beispiel drei oder vier um den Umfang des Lochs in der Mutter verteilte Schenkel.

Bei Anwesenheit von zwei Aussparungen für die Schenkel des Sicherungselements liegen diese Aussparungen vorteilhaft auf der Mittellängsachse der Mutter, so daß der Querschnitt der Mutter nicht von diesen Aussparungen geschwächt wird.

In einer praktisch vorteilhaften Ausbildung umfaßt die Befestigungseinheit weiter eine Gewindestange, die in das Loch in der Mutter eingeschraubt ist, sowie eine metallene Unterlegscheibe, die an der von der Mutter abgekehrten Seite an dem Körper des Sicherungselements anliegt und von einer auf die Gewindestange aufgeschraubten zweiten Mutter gehalten wird. Eine derartige zu einem Ganzen zusammengesetzte Bolzeneinheit wird in der Praxis viel verwendet und ein Beispiel dieses Aufbaus ist in der EP 0 775 838 beschrieben.

Nach einem zweiten Aspekt schafft die vorliegende Erfindung eine Befestigungseinheit nach Anspruch 14. Die aus einer metallenen Mutter, einem Sicherungselement aus Kunststoff und, einer wunschgemäß lösbar an dem Sicherungselement befestigten metallenen Unterlegscheibe gebildeteten Befestigungseinheit kann auf einfache Weise transportiert und bei der Befestigung an dem C-Profil hantiert werden, ohne daß man die Unterlegscheibe verliert, oder diese sich von ihrer Stelle löst, wie bei der bekannten Befestigungseinheit des im Oberbegriff des Anspruchs 14 erwähnten Typs oft der Fall ist. Zum Beispiel kann die metallene Unterlegscheibe in dem Kunststoffsicherungselement mitgespritzt sein.

Die vorliegende Erfindung wird nachfolgend näher anhand der Zeichnung erläutert werden. Es zeigt:
- Fig. 1: in Seitenansicht ein Ausführungsbeispiel einer erfindungsgemäßen Befestigungseinheit mit einem zugehörigen Profilelement,
- Fig. 2: in räumlicher Darstellungsweise und in aufgelösten Einzelteilen die Mutter, das Sicherungselement und die Unterlegscheibe der Befestigungseinheit der Figur 1, und
- Figur 3: in Draufsicht das Sicherungselement der Figuren 1 und 2.

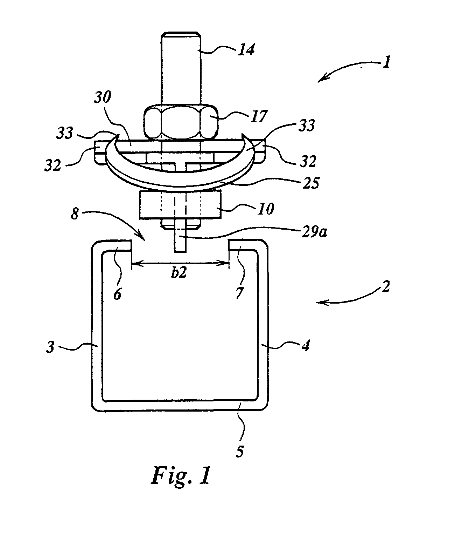

Die in der Figur 1 gezeigte Befestigungseinheit 1 ist zum Befestigen eines Gegenstandes, insbesondere einer Rohrschelle, an einem metallenen Profilelement 2 vorgesehen. In der Figur 1 ist die kennzeichnende Querschnittsform des Profilelements 2 ersichtlich. Das Profilelement 2 hat zwei parallele und sich in Längsrichtung erstreckende Seiten 3, 4, einen, die Seiten 3, 4 verbindenden, Boden 5, und eine, von zwei ab den Seiten 3, 4 einwärts gerichteten Flanschen 6, 7, die zwischen ihnen einen Längsschlitz begrenzen, gebildete Oberseite. Der Längsschlitz 8 erstreckt sich hier über die gesamte Länge des Profilelements 2, aber es können auch über die Länge des Profilelements 2 verteilt mehrere längliche Schlitzlöcher in der Oberseite des Elements 2 vorgesehen sein.

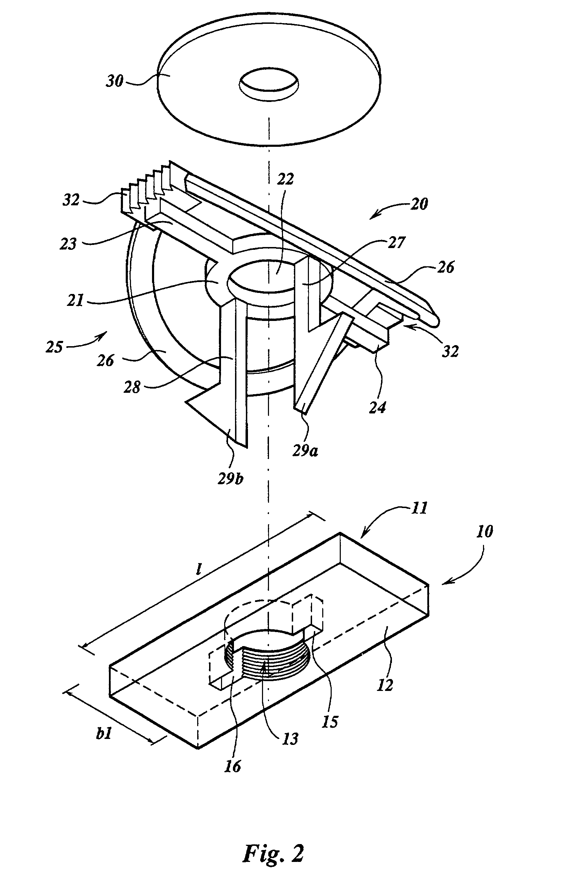

Die Befestigungseinheit 1 umfaßt eine längliche metallene Mutter 10, die in Figur 2 in vergrößertem Maßstab gezeigt ist, mit einer Oberseite 11 und einer ihr gegenüberliegenden Unterseite 12, welche Mutter 10 in diesem Beispiel eine Breite "b1", die kleiner als die Breite "b2" des Längsschlitzes 8 des Profilelements 2 ist, und eine Länge "1" hat, die größer als die Breite "b2" des Längsschlitzes 8 des Profilelements 2 ist. Hierdurch kann, wie allgemein bekannt, die Mutter 10 mit dem Längsschlitz 8 fluchtend gemacht und durch den Längsschlitz 8 in das Profilelement 2 gebracht und dann gedreht werden, um sich im wesentlichen quer zu dem Längsschlitz 8 zu erstrecken und mit ihrer Oberseite 11 die Flansche 6, 7 des Profilelements 2 zu hintergreifen. In einer nicht gezeigten Variante kann, wie an sich aus dem Stand der Technik bekannt ist, die Breite der Mutter geringfügig größer als die Breite des Längsschlitzes sein, wobei die fluchtend mit dem Längsschlitz gemachte Mutter dann in gekipptem Stand zuerst unter den einen Flansch des Profilelements geschoben wird.

Die Mutter 10 hat weiter ein durch sie gehendes und mit einem Innengewinde versehenes Schraubenloch 13 zum Aufnehmen eines männlichen Befestigungselements zum Befestigen eines Gegenstandes, zum Beispiel einer Rohrschelle, an dem Profilelement 2, wenn die Mutter 10 sich in ihrer Querlage befindet. In diesem Beispiel ist das männliche Befestigungselement eine mit einem Außengewinde versehene Gewindelänge 14, die bereits bei der Herstellung der Befestigungseinheit 1 in das Schraubenloch 13 eingeschraubt worden ist.

Die vorliegende Erfindung sieht jedoch auch die Herstellung einer Befestigungseinheit mit den in Figur 2 gezeigten Teilen vor, also ohne die, bzw. den in die Mutter eingeschraubte(n) Gewindelänge, bzw. Bolzen, oder sogar in einer Version, die ausschließlich die Mutter und das Sicherungselement enthält. Hierbei kann das männliche Befestigungselement zum Beispiel bei Anwendung der Einheit an der Mutter festgesetzt werden.

In der Zeichnung ist die Mutter 10 als ein rechteckiger Block dargestellt, aber es wird deutlich sein, daß die Mutter 10 jede andere geeignete Form haben kann, von der viele auf diesem Fachgebiet bekannt sind, wie zum Beispiel eine mit abgeschrägten Ecken versehene Form.

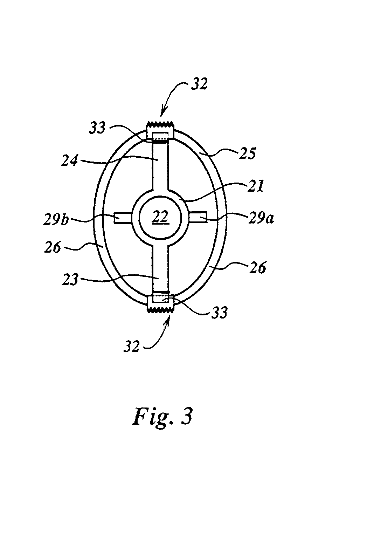

Die Befestigungseinheit 1 umfaßt weiter ein Sicherungselement 20 aus Kunststoff an der Oberseite der Mutter 10, welches Sicherungselement 20 in den Figuren 2 und 3 in Einzelheiten dargestellt ist.

Das Sicherungselement 20 hat einen einteilig durch Spritzgießen aus einem geeigneten Kunststoffmaterial gebildeten Körper, der in näher zu beschreibender Weise mit der Mutter 10 verbunden ist. Das Sicherungselement 20 hat in diesem Beispiel einen kreisringförmigen zentralen Teil 21 mit in diesem eine Öffnung 22 für das männliche Befestigungselement 14, welche Öffnung 22 koaxial zu dem Schraubenloch 13 ist, so daß das Befestigungselement 14 durch die Öffnung gesteckt und in das Schraubenloch 14 hineingeschraubt werden kann.

Das Sicherungselement 20 hat weiter zwei diametral ab dem zentralen Teil 21 auswärts gerichtete Arme 23, 24, die sich hier quer zu der Längsachse der Mutter 10 erstrecken. Diese Arme 23, 24 schließen an ihrem von dem zentralen Teil 21 abgekehrten Ende an elastisch verformbare Flanschangriffsmittel 25 an, die hier die Form eines elastisch verformbaren kreisförmigen Rings aufweisen. Der Ring 25 ist, wie aus der Zeichnung ersichtlich, in solcher Weise gekrümmt ausgeführt, daß ein mittlerer Teil 26 eines jeden Hälftes des Ringes 25 näher an der Oberseite 11 der Mutter 10 liegt, als der an die Enden der Arme 23, 24 anschließende Teil des Ringes 25. Mit Vorteil liegt der Ring 25 mit seinen nach unten gekrümmten Teilen 26 an der Oberseite 11 der Mutter 10 an, wie in Figur 1 gezeigt ist.

Der Ring 25 is der gekrümmte, wie in Figur 3 gezeigte, Zustand, in Draufsicht elliptisch, aber in flachgedrücktem Zustand hat der Ring 25 eine Kreisform mit einem Innendurchmesser, der in geringem Maße größer als die metallene Unterlegscheibe 30 ist. Diese Unterlegscheibe 30 liegt an der von der Mutter 10 abgekehrten Seite an dem Sicherungselement 20 an.

Die Verbindung zwischen dem Sicherungselement 20 und der Mutter 10 ist in diesem Beispiel von zwei an den Körper des Sicherungselements 20 angeformten Verbindungsschenkeln 27, 28 aus Kunststoff, die sich an diametral einander gegenüberliegenden Stellen ab dem zentralen Teil 21 nach unten erstrecken, gebildet. Diese Verbindungsschenkel haben in diesem Beispiel einen rechteckigen Querschnitt und sind jeweils an ihrem freien Ende mit einem Haken, jeweils 29a, 29b versehen, welche Haken sich auswärts richten.

Wie in Figur 2 ersichtlich, ist die Mutter 10 für jeden der Verbindungsschenkel 27, 28 mit einem zugehörigen Schlitz 15, 16 versehen, welche Schlitze 15, 16 sich durch die Mutter 10 hindurch zwischen der Oberseite 11 und der Unterseite 12 erstrecken. Diese Schlitze 15, 16 grenzen an das Schraubenloch 13 und bilden damit eine Öffnung in der Mutter 10.

Bei der Anfertigung der Befestigungseinheit 1 wird das Sicherungselement 20 mit seinen Verbindungsschenkeln 27, 28 in einer solchen Weise durch die eine Öffnung gesteckt, daß die Verbindungsschenkel 27, 28 sich in ihren zugehörigen Schlitz 15, 16 legen und die Haken 29a, 29b die Unterseite 12 der Mutter 10 hintergreifen.

Die Verbindungsschenkel 27, 28 haben in diesem Beispiel solche Querabmessungen, daß sich diese Schenkel 27, 28 teilweise bis in das mit Gewinde versehene Loch 13 in der Mutter 10 erstrecken, in solcher Weise, daß das in dem Schraubenloch 13 festzuschraubende männliche Befestigungselement 14 mit seinen Gewindegängen in den Kunststoff der Schenkel 27, 28 hineinschneidet und dadurch relativ zu der Mutter 10 gesichert wird.

Der Ring 25 hat einen dermaßen größeren Durchmesser als der zentrale Teil 21, daß der Ring 25 des Sicherungselements 20 an diametralen Stellen an die Flansche 6, 7 des Profilelements 2 ankommt, wenn die Mutter 10 durch den Längsschlitz 8 des Profilelements 2 passiert. Beim weiteren in das Profilelement 2 Hineindrücken der Mutter 10, in solcher Weise, daß die Mutter 10 sich schließlich in ihre Querlage drehen kann, wird der Ring 25 aus seiner in der Zeichnung gezeigten gekrümmten Zustand flachgedrückt, so daß der Ring 25 sich um den Außenrand der Unterlegscheibe 30 legt. Wenn anschließend die Einheit 1 gedreht wird, so daß die Mutter 10 in die Querlage gerät, bewirkt die Elastizität des Sicherungselements 20, insbesondere des Ringes 25, daß die Oberseite 11 der Mutter 10 unter von dem Sicherungselement erzeugter Federspannung an den Flanschen 6, 7 des Profilelements 2 gehalten wird. Dies ermöglicht es, die Befestigungseinheit 1 noch entlang dem Profilelelement 2 zu verschieben und an ihre richtige Stelle zu bringen, bevor die auf das männliche Verbindungselement aufgeschraubte Sechskantmutter 17 angezogen wird. Durch die Ausführung des Sicherungselements 20 wird zugleich erreicht, daß - in der Querlage der Mutter - die metallene Unterlegscheibe 30 direkt an der Oberseite der Flansche 6, 7 anliegt.

Um das Handhaben und Drehen der Befestigungseinheit 1 zu erleichtern, sind an dem Außenumfang des Ringes 25, vorzugsweise an den Enden der Arme 23, 24, über die kreisringförmigen Flanschangriffsmitteln 25 hinausragende Bedienungsvorsprünge 32 vorgesehen, vorzugsweise für einen besseren Halt mit einem geriffelten Profil oder dergleichen versehen.

Um die Unterlegscheibe 30 an ihrer Stelle zu halten, wenn das männliche Befestigungselement 14 und/oder die Mutter 17 fehlt, oder die Mutter 17 gelöst ist, ist vorgesehen, daß eine oder mehrere Klemmlaschen 33 an das Sicherungselement 20, vorzugsweise gegenüber den Bedienungsvorsprüngen 32, angeformt sind. Diese Klemmlaschen 33 ragen relativ zu dem Innenumfang des Ringes 25 hinein und bedecken die Unterlegscheibe 30, so daß diese Unterlegscheibe 30 zwischen den Laschen 33 und den gegenüberliegenden Teilen der Arme 23, 24 eingeklemmt wird. Durch die Bedienungsvorsprünge 32 auseinanderzubewegen und diese in Richtung auf die Mutter 10 zu drücken, kann die Unterlegscheibe 30 diese Laschen 33 passieren.

In einer nicht dargestellten Variante kann auch vorgesehen sein, daß die metallene Unterlegscheibe 30 in dem Kunststoffmaterial des Sicherungselements 20 eingegossen ist.

Es wird deutlich sein, daß der Erfindungsgedanke nicht beschränkt ist auf die in der Zeichnung gezeigte Ausführungsformen das Sicherungselements oder der Mutter. Auch kann das Profilelelement entlang den Rändern der Flansche nach innen abgewinkelt sein.

## Patentansprüche

1. Eine Befestigungseinheit (1) zur Befestigung eines Gegenstandes an einem Profilelement (2) mit einem Längsschlitz (8), insbesondere einem Profilelement (2) des Typs, der zwei sich in Längsrichtung erstreckende Seiten (3, 4), einen Boden (5), der die Seiten verbindet, und eine Oberseite aufweist, wobei die Oberseite von einem ab jeder Seite einwärts gerichteten Flansch (6, 7) gebildet ist, welche Flansche zwischen ihnen einen Längsschlitz begrenzen, welche Befestigungseinheit umfaßt:
- eine metallene Mutter (10) mit einer Oberseite und einer ihr gegenüberliegenden Unterseite, welche Mutter eine Länge hat, die größer als die Breite des Längsschlitzes des Profilelements ist und eine solche Breite hat, daß die Mutter mit ihrer Längsachse mit dem Längsschlitz fluchtend gemacht und durch den Längsschlitz in das Profil hineingebracht und dann gedreht werden kann, um sich im wesentlichen quer zu dem Längsschlitz zu erstrecken und mit ihrer Oberseite die Flansche des Profilelements zu hintergreifen, wobei die Mutter weiter ein durch sie gehendes Loch (13) zum Aufnehmen eines männlichen Befestigungselements (14) zum Befestigen des Gegenstandes an dem Profilelement aufweist, wenn die Mutter sich in ihrer Querlage befindet,
- ein Sicherungselement (20) an der Oberseite der Mutter, welches Sicherungselement einen mit der Mutter verbundenen Körper mit einer zentralen Öffnung (22) hat, die im wesentlichen koaxial mit dem Loch in der Mutter ist, welcher Körper weiter an seinen Seiten Flanschangriffsmittel (25) aufweist, die dazu ausgelegt sind, an die Flansche (6, 7) des Profilelelements anzugreifen, wenn die Mutter durch den Längsschlitz passiert ist, in solcher Weise, daß die Mutter (10) klemmend auf den Flanschen (6, 7) des Profilelelements gehalten wird, wobei die Verbindung zwischen dem Sicherungselement und der Mutter zumindestens einen an den Körper des Sicherungselements angeformten Verbindungsschenkel (27, 28) umfaßt, der sich bis in eine zugehörige Aussparung der Mutter erstreckt und in dieser festgesetzt ist, **dadurch gekennzeichnet, daß** die Aussparung in der Mutter für einen Verbindungsschenkel (27, 28) des Sicherungselements (20) als eine an das Loch (13) in der Mutter (10) grenzende Aussparung (15, 16) gebildet ist.

2. Befestigungseinheit nach Anspruch 1, bei der die Aussparung (15, 16) ein Schlitz ist, der sich ab der Oberseite bis an die Unterseite der Mutter erstreckt.

3. Befestigungseinheit nach Anspruch 1 oder 2, bei der der Verbindungsschenkel (27, 28) an seinem freien Ende mit einer Verdickung (29a, 29b) versehen ist, die die Unterseite der Mutter hintergreift.

4. Befestigungseinheit nach einem oder mehreren der vorhergehenden Ansprüche, bei der der Verbindungsschenkel (27, 28) solche Abmessungen hat, daß der Schenkel sich bis in das Loch (13) in der Mutter erstreckt, in solcher Weise, daß ein in dem Loch festzusetzendes männliches Befestigungselement (14) von dem Schenkel (27, 28) gegen ein Sichlösen gesichert ist.

5. Befestigungseinheit nach einem oder mehreren der vorhergehenden Ansprüche, bei der das Sicherungselement (20) zwei diametral zu der Öffnung für das männliche Element liegende Verbindungsschenkel (27, 28) hat, und die Mutter (10) mit korrespondierenden Aussparungen versehen ist.

6. Befestigungseinheit nach einem oder mehreren der vorhergehenden Ansprüche, bei der die Aussparungen (15, 16) auf der Mittellängsachse der Mutter liegen.

7. Befestigungseinheit nach einem oder mehreren der vorhergehenden Ansprüche, bei der das Loch (13) in der Mutter ein mit einem Innengewinde versehenes Schraubenloch (13) ist.

8. Befestigungseinheit nach einem oder mehreren der vorhergehenden Ansprüche, bei der die Befestigungseinheit (1) weiter eine metallene Unterlegscheibe (30) umfaßt, die an der von der Mutter abgekehrten Seite an dem Körper des Sicherungselements (20) anliegt und von dem Körper des Sicherungselements (20) lösbar festgeklemmt ist, insbesondere von den Außenrand der Unterlegscheibe (30) übergreifenden Klemmlaschen (33).

9. Befestigungseinheit nach einem oder mehreren der vorhergehenden Ansprüche, bei der der Körper des Sicherungselements (20) einen kreisförmigen zentralen Teil (21) aufweist, mit in diesem die Öffnung (22) für das männliche Befestigungselement und weiter zumindestens einen sich ab dem zentralen Teil auswärts erstreckenden Arm (23, 24), welcher Arm ringförmige Flanschangriffsmittel (25) mit einem größeren Teil als der zentrale Teil trägt, in solcher Weise, daß die Flanschangriffsmittel des Körpers an diametralen Stellen an die Flansche (6, 7) des Profilelements ankommen, wenn die Mutter (10) durch den Längsschlitz des Profilelelements passiert.

10. Befestigungseinheit nach einem oder mehreren der vorhergehenden Ansprüche, bei der der Körper zwei diametral ausgerichtete Arme (23, 24) hat, die sich quer zu der Längsachse der Mutter (10) erstrecken, und die an ihrem von dem zentralen Teil (22) abgekehrten Ende an ringförmige Flanschangriffsmittel (25) anschließen, wobei jeder im wesentlichen halbkreisförmiger Teil der kreisringförmigen Flanschangriffsmittel in solcher Weise gekrümmt ausgeführt ist, daß dessen mittlerer Teil (26) näher an der Oberseite der Mutter liegt, als der an die Enden der Arme anschließende Teil.

11. Befestigungseinheit nach Anspruch 10, bei der an den Enden der Arme über die ringförmigen Flanschangriffsmittel herausragende Bedienungsvorsprünge (32) mit einem geriffelten Profil oder dergleichen vorgesehen sind.

12. Befestigungseinheit nach Ansprüchen 8 und 10, oder 8 und 11, bei der an den Enden der Arme Bedienungsvorsprünge vorgesehen sind, die an ihrer Innenseite jeweils eine Klemmlasche (33) haben, die den Außenrand der Unterlegscheibe (30) bedeckt, so daß die Unterlegscheibe zwischen den Klemmlaschen (33) und den Armen des Körpers eingeklemmt ist, welche Klemmlaschen durch eine Handhabung der Bedienungsvorsprünge zum Anordnen und Herausnehmen der Unterlegscheibe elastisch federn können.

13. Befestigungseinheit nach einem oder mehreren der vorhergehenden Ansprüche, bei der die Befestigungseinheit weiter ein männliches Befestigungselement (14) umfaßt, das in dem Loch der Mutter (10) festgesetzt ist.

14. Eine Befestigungseinheit nach einem oder mehreren der vorgehenden Ansprüche 1-7, 9-13 wobei das Sicherungselement aus Kunststof gefertigt ist und die Verbindungseinheit weiter eine metallene Unterlegscheibe umfaßt, die an der von der Mutter abgekehrten Seite an dem Körper des Sicherungselements anliegt, wobei die Unterlegscheibe (30) an dem Körper des Sicherungselements (20) montiert ist.

15. Befestigungseinheit nach Anspruch 14, bei der das Sicherungselement (20) mit Klemmmitteln (32) zum lösbar Festklemmen der Unterlegscheibe (30) versehen ist.

16. Befestigungseinheit nach Anspruch 15, bei der die Unterlegscheibe in dem Kunststoffkörper eingebettet ist.

## Claims

1. A fastening unit (1) for fastening an object to a profile element (2) with a longitudinal slot (8), in particular a profile element (2) of the type comprising two sides (3, 4) extending in the longitudinal direction, a bottom (5) which connects the sides, and an upper side, wherein the upper side is formed by a flange (6, 7) directed inwardly from each side, which flanges define between them a longitudinal slot, which fastening unit includes:
- a metal nut (10) with an upper side and a lower side opposite it, which nut has a length which is greater than the width of the longitudinal slot of the profile element and has such a width that the nut with its longitudinal axis can be aligned with the longitudinal slot and introduced through the longitudinal slot into the profile and then turned in order to extend substantially transversely to the longitudinal slot and with its upper side to engage behind the flanges of the profile element, wherein the nut further has a hole (13) passing through it for receiving a male fastening element (14) for fastening the object to the profile element when the nut is in its transverse position,
- a locking element (20) on the upper side of the nut, which locking element has a body connected to the nut and having a central opening (22) which is substantially coaxial with the hole in the nut, which body further has on its sides flange-engaging means (25) which are designed to engage the flanges (6, 7) of the profile element when the nut is fitted through the longitudinal slot, in such a way that the nut (10) is held in clamping relationship on the flanges (6, 7) of the profile element, wherein the connection between the locking element and the nut includes at least one connecting leg (27, 28) which is formed integrally with the body of the locking element and which extends into an associated recess of the nut and is fixed therein,
**characterised in that** the recess in the nut for one connecting leg (27, 28) of the locking element (20) is formed as a recess (15, 16) adjoining the hole (13) in the nut (10).

2. Fastening unit according to claim 1, in which the recess (15, 16) is a slot which extends from the upper side to the lower side of the nut.

3. Fastening unit according to claim 1 or 2, in which the connecting leg (27, 28) is provided at its free end with a thickened portion (29a, 29b) which engages behind the lower side of the nut.

4. Fastening unit according to one or more of the preceding claims, in which the connecting leg (27, 28) has such dimensions that the leg extends into the hole (13) in the nut, in such a way that a male fastening element (14) to be fixed in the hole is locked by the leg (27, 28) to prevent it coming undone.

5. Fastening unit according to one or more of the preceding claims, in which the locking element (20) has two connecting legs (27, 28) located diametrically to the opening for the male element, and the nut (10) is provided with corresponding recesses.

6. Fastening unit according to one or more of the preceding claims, in which the recesses (15, 16) are located on the centre longitudinal axis of the nut.

7. Fastening unit according to one or more of the preceding claims, in which the hole (13) in the nut is a bolt hole (13) provided with an internal thread.

8. Fastening unit according to one or more of the preceding claims, in which the fastening unit (1) further includes a metal washer (30) which on the side facing away from the nut abuts against the body of the locking element (20) and is releasably clamped fast by the body of the locking element (20), in particular by clamping bars (33) engaging over the outer edge of the washer (30).

9. Fastening unit according to one or more of the preceding claims, in which the body of the locking element (20) has a circular central portion (21), with therein the opening (22) for the male fastening element, and further at least one arm (23, 24) extending outwards from the central portion, which arm carries annular flange-engaging means (25) with a larger portion than the central portion, in such a way that the flange-engaging means of the body at diametrical points come up to the flanges (6, 7) of the profile element when the nut (10) fits through the longitudinal slot of the profile element.

10. Fastening unit according to one or more of the preceding claims, in which the body has two diametrically oriented arms (23, 24) which extend transversely to the longitudinal axis of the nut (10), and which at their end facing away from the central portion (22) adjoin annular flange-engaging means (25), wherein each substantially semicircular portion of the annular flange-engaging means is curved in such a way that its middle portion (26) lies closer to the upper side of the nut than the portion adjoining the ends of the arms.

11. Fastening unit according to claim 10, in which at the ends of the arms, protruding beyond the annular flange-engaging means, are provided operating projections (32) with a corrugated profile or the like.

12. Fastening unit according to claims 8 and 10, or 8 and 11, in which at the ends of the arms are provided operating projections which on their inner side each have a clamping bar (33) which covers the outer edge of the washer (30), so that the washer is clamped between the clamping bars (33) and the arms of the body, which clamping bars can spring resiliently by handling of the operating projections for arranging and taking out the washer.

13. Fastening unit according to one or more of the preceding claims, in which the fastening unit further includes a male fastening element (14) which is fixed in the hole of the nut (10).

14. A fastening unit according to one or more of the preceding claims 1-7, 9-13, wherein the locking element is made of plastic and the connecting unit further includes a metal washer which on the side facing away from the nut abuts against the body of the locking element, wherein the washer (30) is mounted on the body of the locking element (20).

15. Fastening unit according to claim 14, in which the locking element (20) is provided with clamping means (32) for releasably securely clamping the washer (30).

16. Fastening unit according to claim 15, in which the washer is embedded in the plastic body.

## Revendications

1. Ensemble (1) de fixation d'un objet sur un élément (2) profilé ayant une fente (8) longitudinale, notamment sur un élément (2) profilé du type qui comprend deux côtés (3, 4) s'étendant dans la direction longitudinale, un fond (5) qui relie les côtés et un côté supérieur, le côté supérieur étant formé par un rebord (6, 7) dirigé vers l'intérieur depuis chaque côté, rebords qui délimitent entre eux une fente longitudinale, l'ensemble de fixation comprenant :
- un écrou (10) métallique ayant un côté supérieur et un côté inférieur qui lui est opposé, cet écrou ayant une longueur qui est plus grande que la largeur de la fente longitudinale de l'élément profilé et ayant une largeur telle que l'axe longitudinal de l'écrou s'aligne avec la fente longitudinale et que l'écrou peut être introduit par la fente longitudinale dans le profil et être alors tourné pour s'étendre sensiblement transversalement à la fente longitudinale et s'accrocher par son côté supérieur sous les rebords de l'élément profilé, l'écrou ayant, en outre, un trou (13) qui le traverse de réception d'un élément (14) mâle de fixation, pour fixer l'objet à l'élément profilé lorsque l'écrou se trouve dans sa position transversale,
- un élément (20) d'assujettissement sur le côté supérieur de l'écrou, cet élément d'assujettissement ayant un corps qui est relié à l'écrou et qui a une ouverture (22) centrale qui est sensiblement coaxiale avec le trou de l'écrou, le corps ayant, en outre, sur ses côtés des moyens (25) d'attaque des rebords, qui sont conçus pour attaquer les rebords (6, 7) de l'élément profilé lorsque l'écrou est passé dans la fente longitudinale de façon à ce que l'écrou (10) soit maintenu coincé sur les rebords (6, 7) de l'élément profilé, la liaison entre l'élément d'assujettissement et l'écrou comprenant au moins une branche (27, 28) de liaison, issue du corps de l'élément d'assujettissement, s'étendant jusque dans un évidement associé de l'écrou et y étant fixée, **caractérisé en ce que** l'évidement de l'écrou pour une branche (27, 28) de liaison de l'élément (20) d'assujettissement est sous la forme d'un évidement (15, 16) adjacent au trou (13) de l'écrou (10).

2. Ensemble de fixation suivant la revendication 1, dans lequel l'évidement (15, 16) est une fente qui s'étend du côté supérieur au côté inférieur de l'écrou.

3. Ensemble de fixation suivant la revendication 1 ou 2, dans lequel l'extrémité libre de la branche (27, 28) de liaison est munie d'un épaississement (29a, 29b) qui s'accroche sous la face inférieure de l'écrou.

4. Ensemble de fixation suivant l'une ou plusieurs des revendications précédentes, dans lequel la branche (27, 28) de liaison a des dimensions telles que la branche s'étend jusque dans le trou (13) de l'écrou de façon à ce qu'un élément (14) mâle de fixation se fixant dans le trou soit empêché par la branche (27, 28) de se détacher.

5. Ensemble de fixation suivant l'une ou plusieurs des revendications précédentes, dans lequel l'élément (20) d'assujettissement a deux branches (27, 28) de liaison, disposées diamétralement par rapport à l'ouverture pour l'élément mâle, et l'écrou (10) est muni d'évidements correspondants.

6. Ensemble de fixation suivant l'une ou plusieurs des revendications précédentes, dans lequel les évidements (15, 16) se trouvent sur l'axe longitudinal médian de l'écrou.

7. Ensemble de fixation suivant l'une ou plusieurs des revendications précédentes, dans lequel le trou (13) de l'écrou est un trou taraudé (13).

8. Ensemble de fixation suivant l'une ou plusieurs des revendications précédentes, dans lequel l'ensemble (1) de fixation comprend en outre une rondelle (30) métallique qui s'applique, du côté éloigné, de l'écrou, au corps de l'élément (20) d'assujettissement et qui est coincée de manière amovible par le corps de l'élément (20) d'assujettissement, notamment par le bord extérieur de pattes (33) de coincement recouvrant la rondelle (30).

9. Ensemble de fixation suivant l'une ou plusieurs des revendications précédentes, dans lequel le corps de l'élément (20) d'assujettissement a une partie (21) centrale circulaire, ayant dans celle-ci l'ouverture (22) pour l'élément mâle de fixation, et, en outre, au moins un bras (23, 24) s'étendant vers l'extérieur depuis la partie centrale, ce bras portant des moyens (25) annulaires d'attaque des rebords, ayant une partie plus grande que la partie centrale de façon à ce que les moyens d'attaque des rebords du corps viennent en des points diamétraux des rebords (6, 7) de l'élément profilé lorsque l'écrou (10) passe dans la fente longitudinale de l'élément profilé.

10. Ensemble de fixation suivant l'une ou plusieurs des revendications précédentes, dans lequel le corps a deux bras (23, 24) dirigés diamétralement, qui s'étendent transversalement à l'axe longitudinal de l'écrou (10) et dont les extrémités, éloignées de la partie (22) centrale, se raccordent à des moyens (25) annulaires d'attaque des rebords, chaque partie sensiblement hémicirculaire des moyens annulaires d'attaque des rebords étant courbées de façon à ce que sa partie (26) médiane se trouve plus près du côté supérieur de l'écrou que la partie se raccordant aux extrémités des bras.

11. Ensemble de fixation suivant la revendication 10, dans lequel il est prévu, aux extrémités des bras, des saillies (32) de manoeuvre dépassant des moyens annulaires d'attaque des rebords et ayant un profil strié ou analogue.

12. Ensemble de fixation suivant les revendications 8 et 10, ou 8 et 11, dans lequel il est prévu aux extrémités des bras des saillies de manoeuvre qui ont, sur leur côté intérieur, respectivement une patte (33) de coincement, qui recouvre le bord extérieur de la rondelle (30) de sorte que la rondelle est coincée entre les pattes (33) de coincement et les bras du corps, ces pattes de coincement pouvant faire ressort élastique par une manipulation des saillies de manoeuvre pour mettre et retirer la rondelle.

13. Ensemble de fixation suivant l'une ou plusieurs des revendications précédentes, dans lequel l'ensemble de fixation comprend en outre un élément (14) mâle de fixation, qui est fixé dans le trou de l'écrou (10).

14. Ensemble de fixation suivant l'une ou plusieurs des revendications 1 à 7, 9 à 13 précédentes, dans lequel l'élément d'assujettissement est en matière plastique et l'ensemble de liaison comprend, en outre, une rondelle métallique qui s'applique, du côté éloigné de l'écrou, au corps de l'élément d'assujettissement, la rondelle (30) étant montée sur le corps de l'élément (20) d'assujettissement.

15. Ensemble de fixation suivant la revendication 14, dans lequel l'élément (20) d'assujettissement est muni de moyens (32) de coincement pour coincer de manière amovible la rondelle (30).

16. Ensemble de fixation suivant la revendication 15, dans lequel la rondelle est incorporée dans le corps en matière plastique.
